# EUROPEAN PATENT SPECIFICATION

(11) **EP 3 208 822 B1**
(45) Date of publication and mention of the grant of the patent: **29.08.2018**
(21) Application number: 17156481.8
(22) Date of filing: 16.02.2017
(51) Int. Cl.: H01H 23/14, H02G 3/12, H02G 3/14

(54) **IMPROVED ROCKER BUTTON SWITCH**
VERBESSERTER WIPPKNOPFSCHALTER
COMMUTATEUR DE BOUTON À BASCULE AMÉLIORÉ

(30) Priority: 18.02.2016 ES 201630193
(43) Date of publication of application: 23.08.2017
(73) Proprietor: ASEA Brown Boveri S.A., 20180 Oiartzun (ES)
(72) Inventor: AIZPURU GALAÑENA, Eduardo, 20180 OIARTZUN (ES); MARTINEZ ALONSO, Ibón, 20180 OIARTZUN (ES)
(74) Representative: Elosegui de la Pena, Inigo

(56) References cited:
- EP-A1- 2 398 032
- EP-A2- 2 439 761
- DE-A1- 2 511 510

## Description

### Object of the invention

The object of the present invention is an innovative rocker button switch that comprises a button bracket which, in turn, is equipped with fins that come in contact with the edge of the rocker button when the latter has rocked towards the aforementioned fins, thereby preventing the aforementioned fins from coming in contact with the metal mounting plate, causing the switch to operate more smoothly than with traditional brackets and preventing the noise produced when the button hits the edge from having a disturbing metallic sound. In turn, this fin serves to fasten the button, preventing it from falling and keeping it joined to the frame-button bracket set when the switch is disassembled. Another object of the present invention is the mechanism for anchoring the bracket to the corresponding metal mounting plate by means of dual-material clips.

### Background of the invention

Schematically, rocker button switches consist of a frame, a button bracket, a rocker button and a metal mounting plate; the rocker button is joined in an articulated manner to its button bracket and is capable of rotating around an axis parallel to the surface of the button bracket that is joined to the metal mounting plate.

In currently existing rocker button switches, the rocking movement is restricted by the contact between the edges and the metal mounting plate. These switches present at least two disadvantages: the first is the unpleasant noise produced when the edge of the button hits the metal mounting plate, and the second lies in the fact that the contact between the edge of the button and the metal mounting plate is an abrupt impact that causes an unpleasant sensation in the users. Moreover, in order to disassemble the switch, the external components thereof, i.e. the frame, the button bracket, the rocker button and the mounting plate, are taken apart, which causes said components to get lost. The document "EP 2 398 032 A1" discloses an improved rocker button switch, of the type that comprises a frame (7), a button bracket (35), a rocker button (6) and a metal mounting plate (3), wherein the front edge of the central opening of the frame (7) is equipped with three or more wings (see figure 5) parallel to the outer surface of the aforementioned frame (7) and projected towards the interior of said central opening, said wings being designed to come in contact with the back surface of the button bracket (35); the button bracket (35) is equipped with fins (37), which are designed to come in contact with one edge of the rocker button (6) when said rocker button (6) has rocked towards said fins (37), each of the aforementioned fins (37) being approximately perpendicular to the surface of its corresponding side and projected towards the exterior of the button bracket (35), and equipped, on the outer edge thereof, with a bulge (38) projected towards the front side of the aforementioned button bracket (35), which is designed to come in contact with the back side of the frame (7); and the front side of the button bracket (35) is equipped with two clips (40) (40) designed to be inserted under pressure into two grooves (4) placed on the metal mounting plate (3) for the anchoring thereof; each clip (40) is formed by a metal core and said metal core is equipped with an elongated base, designed to join the front side of the button bracket (35), and two elongated flat pins, perpendicular to the aforementioned base and opposite to the side of the base designed to be in contact with the button bracket (35), each of the pins being equipped with means for anchoring to the metal mounting plate (3).

The present invention proposes a rocker button bracket that prevents direct contact between the rocker button and the metal mounting plate by inserting a shock absorber, pertaining to the aforementioned bracket, which eliminates contact between the button and the metal mounting plate, thereby causing the switch to operate more smoothly and the noise of the aforementioned impact to be more pleasant; moreover, the button remains joined to the frame-button bracket set during the disassembly thereof.

### Description of the invention

The improved rocker button switch that is the object of the present invention is of the type that comprises a frame, a button bracket, a rocker button and a metal mounting plate, such that:
- the front edge of the central opening of the frame is equipped with three or more wings that are parallel to the outer surface of the aforementioned frame and projected towards the interior of said central opening, said wings being designed to come in contact with the back surface of the button bracket;
- the button bracket is equipped with fins on the sides parallel to the rotation axis of the rocker button, which are designed to come in contact with one edge of the rocker button when said rocker button has rocked towards said fins, each of the aforementioned fins being approximately perpendicular to the surface of its corresponding side, projected towards the exterior of the button bracket, and equipped, on the outer edge thereof, with a bulge projected towards the front side of the aforementioned button bracket, which is designed to come in contact with the back side of the frame;
- and the front side of the button bracket is equipped with two clips designed to be inserted under pressure into two grooves placed on the metal mounting plate for the anchoring thereof; each clip is formed by a metal core coated with a layer of plastic material and said metal core is equipped with an elongated base, designed to join the front side of the button bracket, and two elongated flat pins, perpendicular to the aforementioned base and opposite to the side of the base designed to be in contact with the button bracket, each of the pins being equipped with means for anchoring to the metal mounting plate.

### Brief description of the figures

Figure 1: Shows an exploded perspective view of the invention.
Figure 2: Shows a perspective view of the button bracket.
Figure 3: Shows another perspective view of the button bracket.
Figure 4: Shows a perspective view of one of the clips.

### Preferred embodiment

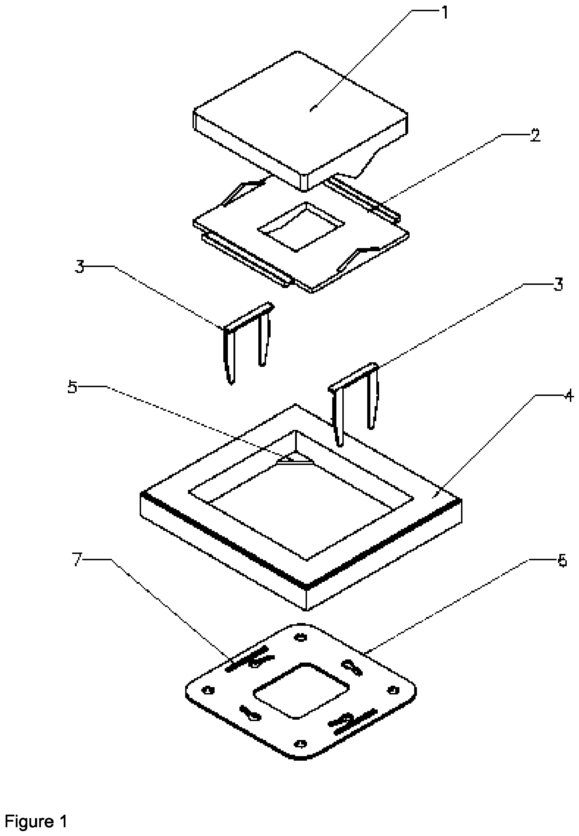

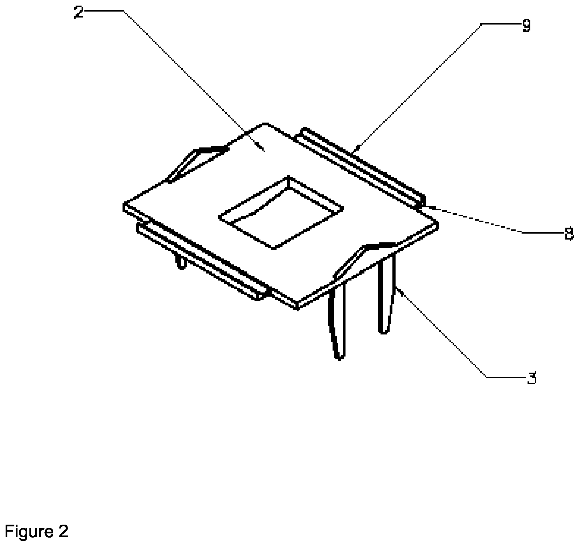

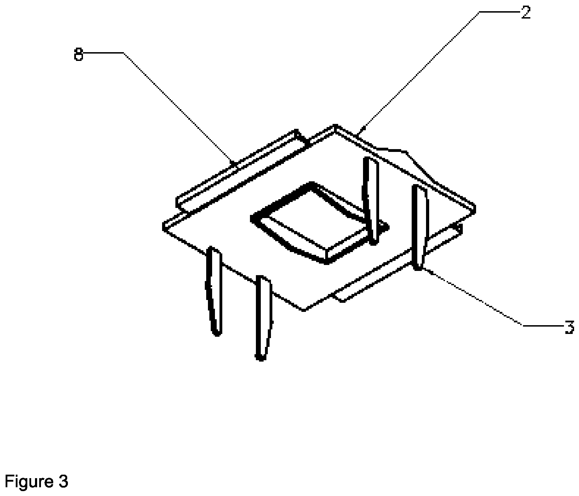

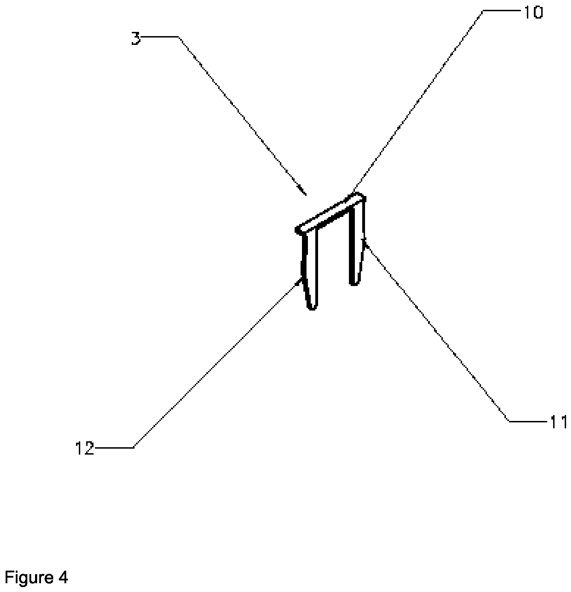

Figures 1-4 show a preferred embodiment of the present invention, wherein:
- the front edge of the central opening of the frame (4) is equipped with three or more wings (5); in this preferred embodiment, there are 4 wings, which are parallel to the outer surface of the aforementioned frame and projected towards the interior of said central opening, said wings being designed to come in contact with the back surface of the button bracket;
- the button bracket (2) is equipped with fins (8), preferably made of a plastic material, on the sides parallel to the rotation axis of the rocker button (1), which are designed to come in contact with one edge of the rocker button when said rocker button has rocked towards said fin, each of the aforementioned fins being approximately perpendicular to the surface of its corresponding side and projected towards the exterior of the button bracket, and the outer edge being equipped with a bulge (9) projected towards the front side of the aforementioned button bracket, which is designed to come in contact with the back side of the frame;
- and the front side of the button bracket (2) is equipped with two clips (3) designed to be inserted under pressure into two grooves (7) placed on the metal mounting plate (6) for the anchoring thereof; each clip is formed by a metal core coated with a layer of plastic material and said metal core is equipped with an elongated base (10), designed to join the front side of the button bracket, and two elongated flat pins (11), perpendicular to the aforementioned base and opposite to the side of the base designed to be in contact with the button bracket, each of the pins being equipped with means for anchoring (12) to the metal mounting plate.

As may be deduced from the above, the frame remains fastened to the button bracket; on the one hand, through contact between the back side of the button bracket and the front side of the wings of the frame, and, on the other hand, through contact between the bulges on the fins and the back side of the frame; consequently, when the set, which is formed by the frame, the button bracket and the rocker button, is disassembled from the metal mounting plate, said components cannot be separated, which prevents the loss thereof. Moreover, using clips on the grooves of the metal mounting plate avoids the need to use tools and, since the clip core is coated with a layer of plastic material, sharp edges are eliminated, thereby eliminating the possibility of cuts.

## Claims

1. Improved rocker button switch, of the type that comprises a frame (4), a button bracket (2), a rocker button (1) and a metal mounting plate (6), wherein the front edge of the central opening of the frame (4) is equipped with three or more wings (5) parallel to the outer surface of the aforementioned frame (4) and projected towards the interior of said central opening, said wings (5) being designed to come in contact with the back surface of the button bracket (2); the button bracket (2) is equipped with fins (8) on the sides parallel to the rotation axis of the rocker button (1), which are designed to come in contact with one edge of the rocker button (1) when said rocker button (1) has rocked towards said fins (8), each of the aforementioned fins (8) being approximately perpendicular to the surface of its corresponding side and projected towards the exterior of the button bracket (2), and equipped, on the outer edge thereof, with a bulge (9) projected towards the front side of the aforementioned button bracket (2), which is designed to come in contact with the back side of the frame (4); and the front side of the button bracket (2) is equipped with two clips (3) designed to be inserted under pressure into two grooves (7) placed on the metal mounting plate (6) for the anchoring thereof; each clip (3) is formed by a metal core coated with a layer of plastic material and said metal core is equipped with an elongated base (10), designed to join the front side of the button bracket (2), and two elongated flat pins, perpendicular to the aforementioned base and opposite to the side of the base designed to be in contact with the button bracket (2), each of the pins being equipped with means for anchoring (12) to the metal mounting plate (6).

2. Improved rocker button switch, according to claim 1, wherein the fins (8) are made of a plastic material.

## Patentansprüche

1. Verbesserter Wippknopfschalter von der Art, die einen Rahmen (4), eine Tastenhalterung (2), eine Wipptaste (1) und eine Metallbefestigungsplatte (6) umfasst, wobei die Vorderkante der zentralen Öffnung des Rahmens (4) mit drei oder mehr Flügeln (5) parallel zur Außenfläche des vorgenannten Rahmens (4) versehen ist und in Richtung auf das Innere der zentralen Öffnung vorsteht, wobei die Flügel (5) dafür ausgelegt sind, mit der Rückseite der Tastenhalterung (2) in Kontakt kommen; die Tastenhalterung (2) ist mit Rippen (8) an den Seiten parallel zur Drehachse des Wippknopfschalters (1) versehen, die dafür ausgelegt sind, um mit einer Kante des Wippknopfschalters (1) in Kontakt zu kommen, wenn dieser Wippknopfschalter (1) in Richtung der Rippen (8) gewippt wurde, wobei jede der vorgenannten Rippen (8) ungefähr senkrecht zu der Oberfläche ihrer entsprechenden Seite ist und in Richtung der Außenseite der Tastenhalterung (2) vorsteht und an der äußeren Kante davon mit einer Ausbuchtung (9) versehen ist, die in Richtung der Vorderseite der vorgenannten Tastenhalterung (2) vorsteht, die dafür ausgelegt ist, mit der Rückseite des Rahmens (4) in Kontakt zu kommen; und die Vorderseite der Tastenhalterung (2) ist mit zwei Clips (3) versehen, die dafür ausgelegt sind, unter Druck in zwei Nuten (7) eingeführt zu werden, die auf der Metallbefestigungsplatte (6) für deren Verankerung angeordnet sind; jeder Clip (3) ist durch einen Metallkern gebildet, der mit einer Schicht aus Kunststoffmaterial beschichtet ist, und der Metallkern ist mit einer langgestreckten Basis (10) versehen, die dafür ausgelegt ist, sich mit der Vorderseite der Tastenhalterung (2) zu verbinden, und zwei länglichen flachen Stiften, senkrecht zu der vorgenannten Basis und gegenüber der Seite der Basis, die dafür ausgelegt ist, in Kontakt mit der Tastenhalterung (2) zu kommen, wobei jeder der Stifte mit Mitteln zur Verankerung (12) an der Metallbefestigungsplatte (6) versehen ist.

2. Verbesserter Wippknopfschalter nach Anspruch 1, wobei die Rippen (8) aus einem Kunststoffmaterial gefertigt sind.

## Revendications

1. Commutateur de bouton à bascule amélioré, du type comprenant un châssis (4), un support de bouton (2), un commutateur de bouton à bascule (1) et une plaque de montage en métal (6), dans lequel le bord avant de l'ouverture centrale du châssis (4) est équipé de trois ou plusieurs ailes (5) parallèles à la surface externe du châssis (4) mentionné ci-dessus et se projetant vers l'intérieur de ladite ouverture centrale, lesdites ailes (5) étant conçues pour entrer en contact avec la surface arrière du support de bouton (2) ; le support de bouton (2) est équipé d'ailettes (8) sur les côtés parallèles à l'axe de rotation du commutateur de bouton à bascule (1), qui sont conçues pour entrer en contact avec un bord du commutateur de bouton à bascule (1) lorsque ledit commutateur de bouton à bascule (1) a basculé en direction desdites ailettes (8), chacune des ailettes mentionnées ci-dessus (8) étant approximativement perpendiculaire à la surface de son côté associé et se projetant vers l'extérieur du support de bouton (2), et équipé, sur son bord externe, d'un renflement (9) se projetant vers le côté avant du support de bouton (2) mentionné ci-dessus, qui est conçu pour entrer en contact avec le côté arrière du châssis (4) ; et le côté avant du support de bouton (2) est équipé de deux clips (3) conçus pour être insérés par pression dans deux rainures (7) situées sur la plaque de montage en métal (6) pour son ancrage ; chaque clip (3) est formé d'une âme en métal revêtue d'un couche de matériau plastique et ladite âme en métal est munie d'une base allongée (10), conçue pour rejoindre le côté avant du support de bouton (2), et de deux broches plates allongées, perpendiculaires à la base mentionnée ci-dessus et opposées au côté de la base conçu pour être en contact avec le support de bouton (2), chacune des broches étant équipée de moyens d'ancrage (12) à la plaque de montage en métal (6).

2. Commutateur de bouton à bascule amélioré, selon la revendication 1, dans lequel les ailettes (8) sont fabriquées dans un matériau plastique.
